# EUROPEAN PATENT SPECIFICATION

(11) **EP 1 475 208 B1**
(45) Date of publication and mention of the grant of the patent: **14.08.2013**
(21) Application number: 04018353.5
(22) Date of filing: 16.01.1998
(51) Int. Cl.: B29C 44/00, B29C 47/74, B29C 44/04, B29C 45/00, B29C 44/34, B29C 44/38, B29C 47/00, B29C 47/44, B29C 47/36, B29C 47/10, B29C 47/08

(54) **Method for forming a molded polymeric part**
Verfahren zum Formen eines Kunststoffteils
Procédé pour former une pièce moulée en plastique

(30) Priority: 16.01.1997 US 35631 P; 19.12.1997 US 68350 P
(43) Date of publication of application: 10.11.2004
(62) Divisional of application: 02011582.0
(73) Proprietor: Trexel Inc., Woburn, MA 01801 (US)
(72) Inventor: Pierick, David E., San Diego CA 92127 (US); Anderson, Jere R., Newburyport MA 01950 (US); Cha, Sung W., Moonchon 1803-101 South Korea 411-372 (KR); Stevenson, James F., Morristown JK 07960 (US); Laing, Dana E., Gloucester MA 01930 (US)
(74) Representative: HOFFMANN EITLE

(56) References cited:
- EP-A- 0 228 016
- EP-A1- 0 799 853
- JP-A- 8 085 129
- US-A- 5 334 356

## Description

### Field of the Invention

The present invention relates generally to polymeric material processing, and more particularly to a method for forming a molded polymeric part.

### Background of the Invention

Structural foamed materials are known, and can be produced by injecting a physical blowing agent into a molten polymeric stream, dispersing the blowing agent in the polymer to form a two-phase mixture of blowing agent cells in polymer, injecting the mixture into a mold having a desired shape, and allowing the mixture to solidify therein. A pressure drop in the mixture can cause the cells in the polymer to grow. As an alternative to a physical blowing agent, a chemical blowing agent can be used which undergoes a chemical reaction in the polymer material causing formation of a gas. Chemical blowing agents generally are low molecular weight organic compounds that decompose at a critical temperature and release a gas such as nitrogen, carbon dioxide, or carbon monoxide. Under some conditions the cells can be made to remain isolated, and a closed-cell foamed material results. Under other, typically more violent foaming conditions, the cells rupture or become interconnected and an open-cell material results. A sample of standard injection molding techniques described in the patent literature follow.

U.S. Patent No. 3,436,446 (Angell) describes a method and apparatus for molding foamed plastic articles with a solid skin by controlling the pressure and temperature of the mold.

U.S. Patent No. 4,479,914 (Baumrucker) describes a foamed article forming method in which a mold cavity is pressurized with gas to prevent premature diffusion of blowing gas from the material injected into the cavity. Pre-pressurization gas is vented during injection of material to be foamed, finally to a vacuum chamber creating a vacuum that draws the material throughout the mold cavity.

Microcellular material typically is defined by polymeric foam of very small cell size and various microcellular material is described in U.S. Patent Nos. 5,158,986 and 4,473,665. These patents describe subjecting a single-phase solution of polymeric material and physical blowing agent to thermodynamic instability required to create sites of nucleation of very high density, followed by controlled cell growth to produce microcellular material. U.S. Patent No. 4,473,665 (Martini-Vvedensky) describes a molding system and method for producing microcellular parts. Polymeric pellets are pre-pressurized with a gaseous blowing agent and melted in a conventional extruder to form a solution of blowing agent and molten polymer, which then is extruded into a pressurized mold cavity. The pressure in the mold is maintained above the solubility pressure of the gaseous blowing agent at melt temperatures for given initial saturation. When the molded part temperature drops to the appropriate critical nucleation temperature, the pressure on the mold is dropped, typically to ambient, and the part is allowed to foam.

U.S. Patent No. 5,158,986 (Cha et al.) describes an alternative molding system and method for producing microcellular parts. Polymeric pellets are introduced into a conventional extruder and melted. A blowing agent of carbon dioxide in its supercritical state is established in the extrusion barrel and mixed to form a homogenous solution of blowing agent and polymeric material. A portion of the extrusion barrel is heated so that as the mixture flows through the barrel, a thermodynamic instability is created, thereby creating sites of nucleation in the molten polymeric material. The nucleated material is extruded into a pressurized mold cavity. Pressure within the mold is maintained by counter pressure of air. Cell growth occurs inside the mold cavity when the mold cavity is expanded and the pressure therein is reduced rapidly; expansion of the mold provides a molded and foamed article having small cell sizes and high cell densities: Nucleation and cell growth occur separately according to the technique; thermally-induced nucleation takes place in the barrel of the extruder, and cell growth takes place in the mold.

US-A-5 334 356 discloses a method for forming a molded polymeric part comprising introducing polymeric material admixed with supercritical fluid into a mold, and allowing the polymeric material to solidify in the mold, according to the preamble of claim 1.

While the above and other reports represent several techniques associated with the manufacture of microcellular material and the manufacture of material via injection molding, a need exists in the art for improved microcellular injection molding processes.

It is, therefore, an object of the invention to provide injection molding methods effective in producing microcellular structural foams and, in particular, very thin articles. It is another object to provide methods useful in injection molding of microcellular structural foams, but also useful in injection molding of conventional foams. Summary of the Invention

According to claim 1 of the present invention, there is provided a method for forming a molded polymeric part comprising:
introducing polymeric material admixed with supercritical fluid into a mold; and
allowing the polymeric material to solidify in the mold;
characterised in that the mold includes a portion having an interior dimension of less than 3.17 mm (0.125 inch).

Preferably the mold includes a portion having an interior dimension of less than 2.54 mm (0.100 inch).

Preferably the polymeric material is allowed to solidify in the mold to form a microcellular polymeric material. Such a material preferably has a void volume of at least 5%.

The method of the present invention preferably includes the steps of forming a single-phase solution of the polymeric material and the supercritical fluid and introducing the resulting single-phase solution into the mold. Preferably, the single-phase solution is nucleated whilst being introduced into the mold.

Preferably the supercritical fluid is carbon dioxide or nitrogen.

Preferably the method of the present invention comprises introducing a physical or chemical blowing agent in to the polymeric material to form a blowing agent and polymeric material mixture and processing the mixture under conditions such that the blowing agent is a supercritical fluid.

Other advantages, novel features, and objects of the invention will become apparent from the following detailed description of the invention when considered in conjunction with the accompanying drawings, which are schematic and which are not intended to be drawn to scale. In the figures, each identical or nearly identical component that is illustrated in various figures is represented by a single numeral. For purposes of clarity, not every component is labeled in every figure, nor is every component of each embodiment of the invention shown where illustration is not necessary to allow those of ordinary skill in the art to understand the invention.

### Brief Description of the Drawings

In the drawings:
Fig. 1 illustrates a microcellular injection or intrusion molding system which may be used to carry out the method of the present invention, including an extrusion system having a nucleating pathway defining an orifice of a molding chamber;
Fig. 2 illustrates a microcellular injection molding system which may be used to carry out the method of the invention including an accumulator;
Fig. 3 illustrates one embodiment of a molding chamber of molding systems which may be used to carry out the method of the invention, including a movable wall;
Fig. 4 illustrates another embodiment of a molding chamber, where the molding chamber is a gas-pressurized mold;
Fig. 6 illustrates one stage of operation of a system for accumulation and injection molding of microcellular material to form an article having a solid wall and a microcellular interior (blowing agent-rich and blowing agent-poor regions), immediately after injection;
Fig. 7 illustrates the system of Fig. 6 at a stage of operation after one injection cycle, during filling of the accumulator;
Fig. 8 illustrates a microcellular injection molding system for forming blowing agent-rich and blowing agent-poor regions of molten polymer, including a melt pump, a gas injection port, and a mixer;
Fig. 9 illustrates a helical screw for use in an injection molding system or other extrusion system, including a lumen that passes through a screw flight and is in fluid communication with a source of foaming agent for distributing a foaming agent in a barrel of an extruder;
Fig. 10 is a photocopy of a photomicrograph of an injected molded article formed using systems and methods of the present invention;
Fig. 11 is a photocopy of a photomicrograph of a microcellular injection molded article produced by the method of the invention;
Fig. 12 is a photocopy of a photomicrograph of another microcellular injection molded article produced by the method of the invention;
Fig. 13 is a photocopy of a photomicrograph of another microcellular injection molded article produced by the method of the invention;
Fig. 14 is a photocopy of a photomicrograph of another microcellular injection molded article produced by the method of the invention;
Fig. 15 is a photocopy of another microcellular injection molded article produced by the method of the invention;
Fig. 16 is a photocopy of a photomicrograph of a surface of a comparative, prior art, solid non-foamed injection molded article;
Fig. 17 is a photocopy of a photomicrograph of a surface of a microcellular injection molded article produced by the method of the invention having a smooth surface free of splay and a swirl visible to the naked human eye; and
Fig. 18 is a photocopy of a photomicrograph of a surface of an injection molded foam polymeric article that includes swirls visible to the naked human eye.

### Detailed Description of the Invention

The various embodiments and aspects of the invention will be better understood from the following definitions. As used herein, "nucleation" defines a process by which a homogeneous, single-phase solution of polymeric material, in which is dissolved molecules of a species that is a gas under ambient conditions, undergoes formations of clusters of molecules of the species that define "nucleation sites", from which cells will grow. That is, "nucleation" means a change from a homogeneous, single-phase solution to a mixture in which sites of aggregation of at least several molecules of blowing agent are formed. Nucleation defines that transitory state when gas, in solution in a polymer melt, comes out of solution to form a suspension of bubbles within the polymer melt. Generally this transition state is forced to occur by changing the solubility of the polymer melt from a state of sufficient solubility to contain a certain quantity of gas in solution to a state of insufficient solubility to contain that same quantity of gas in solution. Nucleation can be effected by subjecting the homogeneous, single-phase solution to rapid thermodynamic instability, such as rapid temperature change, rapid pressure drop, or both. Rapid pressure drop can be created using a nucleating pathway, defined below. Rapid temperature change can be created using a heated portion of an extruder, a hot glycerine bath, or the like. A "nucleating agent" is a dispersed agent, such as talc or other filler particles, added to a polymer and able to promote formation of nucleation sites from a single-phase, homogeneous solution. Thus "nucleation sites" do not define locations, within a polymer, at which nucleating agent particles reside. "Nucleated" refers to a state of a fluid polymeric material that had contained a single-phase, homogeneous solution including a dissolved species that is a gas under ambient conditions, following an event (typically thermodynamic instability) leading to the formation of nucleation sites. "Non-nucleated" refers to a state defined by a homogeneous, single-phase solution of polymeric material and dissolved species that is a gas under ambient conditions, absent nucleation sites. A "non-nucleated" material can include nucleating agent such as talc. A "polymeric material/blowing agent mixture" can be a single-phase, non-nucleated solution of at least the two, a nucleated solution of at least the two, or a mixture in which blowing agent cells have grown. "Essentially closed-cell" microcellular material is meant to define material that, at a thickness of about 100 microns, contains no connected cell pathway through the material. "Nucleating pathway" is meant to define a pathway that forms part of microcellular polymeric foam extrusion apparatus and in which, under conditions in which the apparatus is designed to operate (typically at pressures of from about 10.3 MPa to about 206.8 MPa (about 1500 to about 30,000 psi) upstream of the nucleator and at flow rates of greater than about 4.5 kg (about 10 pounds) polymeric material per hour), the pressure of a single-phase solution of polymeric material admixed with blowing agent in the system drops below the saturation pressure for the particular blowing agent concentration at a rate or rates facilitating rapid nucleation. A nucleating pathway defines, optionally with other nucleating pathways, a nucleation or nucleating region of a device of the invention. "Reinforcing agent", as used herein, refers to auxiliary, essentially solid material constructed and arranged to add dimensional stability, or strength or toughness, to material. Such agents are typified by fibrous material as described in U.S. Patent Nos. 4,643,940 and 4,426,470. "Reinforcing agent" does not, by definition, necessarily include filler or other additives that are not constructed and arranged to add dimensional stability. Those of ordinary skill in the art can test an additive to determine whether it is a reinforcing agent in connection with a particular material.

The present invention provides methods for the intrusion and injection molding of polymeric material, including microcellular polymeric material, and methods useful in intrusion and injection molding and also useful in connection with other techniques. For example, although injection and intrusion molding are primarily described, the invention can be modified readily by those of ordinary skill in the art for use in other molding methods such as, without limitation, low-pressure molding, co-injection molding, laminar molding and injection compression. For purposes of the present invention, microcellular material is defined as foamed material containing cells of size less than about 100 microns in diameter, or material of cell density of generally greater than at least about 10⁶ cells per cubic centimeter, or preferably both. The void fraction of microcellular material generally varies from 5% to 98%. Supermicrocellular material is defined for purposes of the invention by cell sizes smaller than 1 µm and cell densities greater than 10¹² cells per cubic centimeter.

In preferred embodiments. microcellular material is produced having average cell size of less than about 50 microns. In some embodiments particularly small cell size is desired. and in these embodiments material has average cell size of less than about 20 microns, more preferably less than about 10 microns, and more preferably still less than about 5 microns. The microcellular material preferably has a maximum cell size of about 100 microns. In embodiments where particularly small cell size is desired, the material can have maximum cell size of about 50 microns, more preferably about 25 microns, more preferably about 15 microns, more preferably about 8 microns, and more preferably still about 5 microns. A set of embodiments includes all combinations of these noted average cell sizes and maximum cell sizes. For example, one embodiment in this set of embodiments includes microcellular material having an average cell size of less than about 30 microns with a maximum cell size of about 50 microns, and as another example an average cell size of less than about 30 microns with a maximum cell size of about 35 microns, etc. That is, microcellular material designed for a variety of purposes can be produced having a particular combination of average cell size and a maximum cell size preferable for that purpose. Control of cell size is described in greater detail below.

In one embodiment, essentially closed-cell microcellular material is produced in accordance with the techniques of the present invention. As used herein, "essentially closed-cell" is meant to define material that, at a thickness of about 100 microns, contains no connected cell pathway through the material.

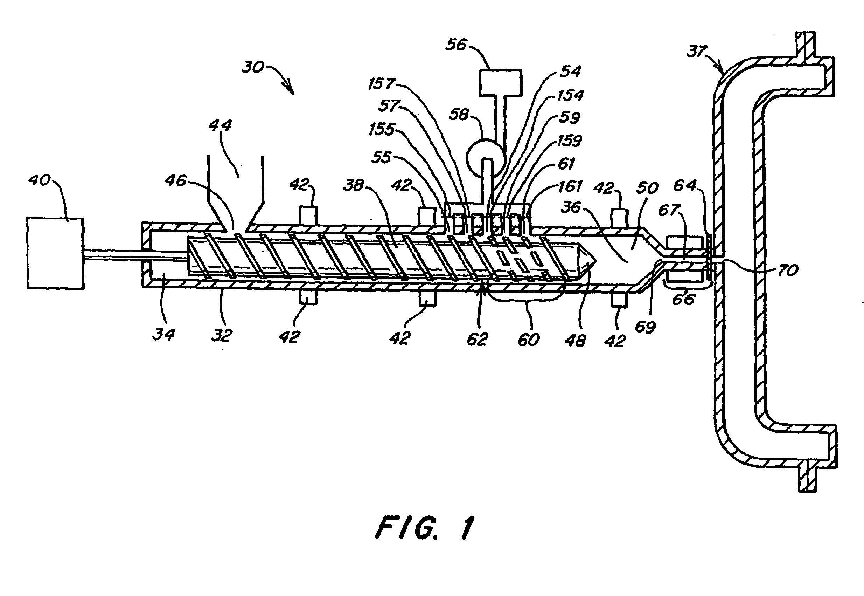

Referring now to Fig. 1, a molding system 30 is illustrated schematically that can be used to carry out molding according to a variety of embodiments of the invention. System 30 of Fig. 1 includes a barrel 32 having a first, upstream end 34, and a second, downstream end 36 connected to a molding chamber 37. Mounted for rotation within barrel 32 is a screw 38 operably connected, at its upstream end, to a drive motor 40. Although not shown in detail, screw 38 includes feed, transition, gas injection, mixing, and metering sections.

Positioned along barrel 32, optionally, are temperature control units 42. Control units 42 can be electrical heaters, can include passageways for temperature control fluid, and or the like. Units 42 can be used to heat a stream of pelletized or fluid polymeric material within the barrel to facilitate melting, and/or to cool the stream to control viscosity and, in some cases, blowing agent solubility. The temperature control units can operate differently at different locations along the barrel, that is, to heat at one or more locations, and to cool at one or more different locations. Any number of temperature control units can be provided.

Barrel 32 is constructed and arranged to receive a precursor of polymeric material. As used herein. "precursor of polymeric material" is meant to include all materials that are fluid, or can form a fluid and that subsequently can harden to form a microcellular polymeric article. Typically, the precursor is defined by thermoplastic polymer pellets, but can include other species. For example, in one embodiment the precursor can be defined by species that will react to form microcellular polymeric material as described, under a variety of conditions. The invention is meant to embrace production of microcellular material from any combination of species that together can react to form a polymer, typically monomers or low-molecular-weight polymeric precursors which arc mixed and foamed as the reaction takes place. In general, species embraced by the invention include thermosetting polymers in which a significant increase in molecular weight of the polymer occurs during reaction, and during foaming, due to crosslinking of polymeric components. For example, polyamides of the condensation and addition type, including aliphatic and aromatic polyamides such as polyhexamethyleneadipamide, poly(e-caprolactam), polyenes such as cycloaromatic polymers including polydicyclopentadiene, acrylic polymers such as polyacrylamide, polyacrylamate, acrylic ester polymers such as 2-cyanoacrylic ester polymers, acrylonitrile polymers, and combinations.

Preferably, a thermoplastic polymer or combination of thermoplastic polymers is selected from among amorphous, semicrystalline, and crystalline material including polyaromatics such as styrenic polymers including polystyrene, polyolefins such as polyethylene and polypropylene, fluoropolymers, crosslinkable polyolefins, polyamides, polyaromatics such as polystyrene and polyvinyl chloride. Thermoplastic elastomers can be used as well, especially metallocene-catalyzed polyethylene.

Typically, introduction of the pre-polymeric precursor utilizes a standard hopper 44 for containing pelletized polymeric material to be fed into the extruder barrel through orifice 46, although a precursor can be a fluid prepolymeric material injected through an orifice and polymerized within the barrel via, for example, auxiliary polymerization agents. In connection with the present invention, it is important only that a fluid stream of polymeric material be established in the system.

Immediately downstream of downstream end 48 of screw 38 in Fig. 1 is a region 50 which can be a temperature adjustment and control region, auxiliary mixing region, auxiliary pumping region, or the like. For example, region 50 can include temperature control units to adjust the temperature of a fluid polymeric stream prior to nucleation, as described below. Region 50 can include instead, or in addition, additional, standard mixing units (not shown), or a flow-control unit such as a gear pump (not shown). In another embodiment, region 50 can be replaced by a second screw in tandem which can include a cooling region. In an embodiment in which screw 38 is a reciprocating screw in an injection molding system, described more fully below, region 50 can define an accumulation region in which a single-phase, non-nucleated solution of polymeric material and a blowing agent is accumulated prior to injection into mold 37.

Microcellular material production according to the present invention preferably uses a physical blowing agent, that is, an agent that is a gas under ambient conditions (described more fully below). However, chemical blowing agents can be used and can be formulated with polymeric pellets introduced into hopper 44. Suitable chemical blowing agents include those typically relatively low molecular weight organic compounds that decompose at a critical temperature or another condition achievable in extrusion and release a gas or gases such as nitrogen, carbon dioxide, or carbon monoxide. Examples include azo compounds such as azo dicarbonamide.

As mentioned, in preferred embodiments a physical blowing agent is used. One advantage of embodiments in which a physical blowing agent, rather than a chemical blowing agent, is used is that recyclability of product is maximized. Use of a chemical blowing agent typically reduces the attractiveness of a polymer to recycling since residual chemical blowing agent and blowing agent by-products contribute to an overall non-uniform recyclable material pool. Since foams blown with chemical blowing agents inherently include a residual, unreacted chemical blowing agent after a final foam product has been produced, as well as chemical by-products of the reaction that forms a blowing agent, material of the present invention in this set of embodiments includes residual chemical blowing agent, or reaction by-product of chemical blowing agent, in an amount less than that inherently found in articles blown with 0.1 % by weight chemical blowing agent or more, preferably in an amount less than that inherently found in articles blown with 0.05% by weight chemical blowing agent or more. In particularly preferred embodiments, the material is characterized by being essentially free of residual chemical blowing agent or free of reaction by-products of chemical blowing agent. That is, they include less residual chemical blowing agent or by-product that is inherently found in articles blown with any chemical blowing agent. In this embodiment, along barrel 32 of system 30 is at least one port 54 in fluid communication with a source 56 of a physical blowing agent. Any of a wide variety of physical blowing agents known to those of ordinary skill in the art such as hydrocarbons, chlorofluorocarbons. nitrogen, carbon dioxide, and the like can be used in connection with the invention. or mixtures thereof, and, according to a preferred embodiment, source 56 provides carbon dioxide as a blowing agent. Supercritical fluid blowing agents are especially preferred. in particular supercritical carbon dioxide. In one embodiment solely supercritical carbon dioxide is used as blowing agent. Supercritical carbon dioxide can be introduced into the extruder and made to form rapidly a single-phase solution with the polymeric material either by injecting carbon dioxide as a supercritical fluid. or injecting carbon dioxide as a gas or liquid and allowing conditions within the extruder to render the carbon dioxide supercritical. Injection of carbon dioxide into the extruder in a supercritical state is preferred. The single-phase solution of supercritical carbon dioxide and polymeric material formed in this manner has a very low viscosity which advantageously allows lower temperature molding, as well as rapid filling of molds having close tolerances to form very thin molded parts, which is discussed in greater detail below.

A pressure and metering device 58 typically is provided between blowing agent source 56 and that at least one port 54. Device 58 can be used to meter the blowing agent so as to control the amount of the blowing agent in the polymeric stream within the extruder to maintain blowing agent at a level, according to one set of embodiments, between about 1% and 25% by weight, preferably between about 6% and 20% by weight, more preferably between about 8% and 15% by weight, more preferably still between about 10% and 12% by weight, based on the weight of the polymeric stream and blowing agent. The particular blowing agent used (carbon dioxide, nitrogen, etc.) and the amount of blowing agent used is often dependent upon the polymer, the density reduction, cell size and physical properties desired.

The pressure and metering device can be connected to a controller (not shown) that also is connected to drive motor 40 to control metering of blowing agent in relationship to flow of polymeric material to very precisely control the weight percent blowing agent in the fluid polymeric mixture.

Although port 54 can be located at any of a variety of locations along the barrel, according to a preferred embodiment it is located just upstream from a mixing section 60 of the screw and at a location 62 of the screw where the screw includes unbroken flights.

A supercritical fluid blowing agent also provides an advantage in that it facilitates the rapid, intimate mixing of dissimilar polymeric materials, thereby providing a method for mixing and molding dissimilar polymeric materials without post-mold delamination. Dissimilar materials include, for example, polystyrene and polypropylene, or polystyrene and polyethylene. These dissimilar materials typically have significantly different viscosity, polarity, or chemical functionality that, in most systems, precludes formation of a well-mixed, homogeneous combination, leading to delamination or other physical property reduction or physical property degradation. Preferably, in this embodiment, at least two dissimilar components are present each in an amount of at least about 1% by weight, preferably at least about 5%, more preferably at least about 10%, more preferably still at least about 20%.

Typical prior art techniques for forming combinations of dissimilar polymeric materials involves extruding and pelletizing dissimilar polymeric materials which then are provided, as pellets, in hopper 44 of a system such as that of Fig. 1. Using a supercritical fluid blowing agent, in accordance with this aspect of the invention, eliminates the necessity for using pre-mixed pellets or compounding equipment. In this aspect, a mixture of different polymer pellets, for example a mixture of polystyrene pellets and polypropylene pellets, can be provided in hopper 44, melted, intimately mixed with a supercritical fluid blowing agent, and extruded as a well-mixed homogeneous mixture. In this aspect of the invention a single-phase solution of blowing agent and multi-component polymeric material, including dissimilar materials, can be formed at flow rates and within time periods specified below. This aspect of the invention can be used to form polymeric articles composed of at least two dissimilar polymeric materials that resist delamination via extrusion, molding as described herein, or other techniques.

The described arrangement facilitates a method that is practiced according to several embodiments of the invention, in combination with injection or intrusion molding. The method involves introducing, into fluid polymeric material flowing at a rate of from about 0.2 to about 0.6 kg/hr (about 0.4 to about 1.4 lbs/hr.), a blowing agent that is a gas under ambient conditions and, in a period of less than about 1 minute, creating a single-phase solution of the blowing agent fluid in the polymer. The blowing agent fluid is present in the solution in an amount of at least about 2.5% by weight based on the weight of the solution in this arrangement. In some embodiments, the rate of flow of the fluid polymeric material is from about 2.7 to 5.4 kg/hr (about 6 to 12 lbs/hr). In these arrangements, the blowing agent fluid is added and a single-phase solution formed within one minute with blowing agent present in the solution in an amount of at least about 3% by weight, more preferably at least about 5% by weight, more preferably at least about 7%, and more preferably still at least about 10% (although, as mentioned, in a another set of preferred embodiments lower levels of blowing agent are used). In these arrangements, at least about 1.1 kg (2.4 lbs) per hour blowing agent, preferably CO₂, is introduced into the fluid stream and admixed therein to form a single-phase solution. The rate of introduction of blowing agent is matched with the rate of flow of polymer to achieve the optimum blowing agent concentration.

Downstream of region 50 is a nucleator 66 constructed to include a pressure-drop nucleating pathway 67. As used herein, "nucleating pathway" in the context of rapid pressure drop is meant to define a pathway that forms part of microcellular polymer foam extrusion apparatus and in which, under conditions in which the apparatus is designed to operate (typically at pressures of from about 10.3 MPa to about 206.8 MPa (about 1500 to about 30,000 psi) upstream of the nucleator and at flow rates of greater than about 2.3 kg (about 5 lbs) polymeric material per hour), the pressure of a single-phase solution of polymeric material admixed with blowing agent in the system drops below the saturation pressure for the particular blowing agent concentration at a rate or rates facilitating nucleation. Nucleating pathway 67 includes an inlet end 69 for receiving a single-phase solution of polymeric material precursor and blowing agent as a fluid polymeric stream, and a nucleated polymer releasing end 70 for delivering nucleated polymeric material to molding chamber, or mold, 37. Nucleator 66 can be located in a variety of locations downstream of region 50 and upstream of mold 37. In a preferred embodiment, nucleator 66 is located in direct fluid communication with mold 37, such that the nucleator defines a nozzle connecting the extruder to the molding chamber and the nucleated polymer releasing end 70 defines an orifice of molding chamber 37. According to one set of embodiments, the invention lies in placing a nucleator upstream of a mold. Although not illustrated, another embodiment of nucleator 66 includes a nucleating pathway 67 constructed and arranged to have a variable cross-sectional dimension, that is, a pathway that can be adjusted in cross-section. A variable cross-section nucleating pathway allows the pressure drop rate in a stream of fluid polymeric material passing therethrough to be varied in order to achieve a desired nucleation density.

In one embodiment, a nucleating pathway that changes in cross-sectional dimension along its length is used. In particular, a nucleating pathway that decreases in cross-sectional dimension in a downstream direction can significantly increase pressure drop rate thereby allowing formation of microcellular material of very high cell density using relatively low levels of blowing agent. These and other exemplary and preferred nucleators are described in co-pending U.S. patent application serial no. 08/777,709 entitled "Method and Apparatus for Microcellular Extrusion" and International patent application serial no. PCT/US97/15088, entitled "Method and Apparatus for Microcellular Polymer Extrusion" of Anderson, et al., both referenced above.

While pathway 67 defines a nucleating pathway, some nucleation also may take place in the mold itself as pressure on the polymeric material drops at a very high rate during filling of the mold.

The system of Fig. 1 illustrates one general embodiment of the present invention in which a single-phase, non-nucleated solution of polymeric material and blowing agent :s nucleated, via rapid pressure drop, while being urged into molding chamber 37 via the rotation action of screw 38. This embodiment illustrates an intrusion molding technique and, in this embodiment, only one blowing agent injection port 54 need be utilized.

In another embodiment, screw 38 of system 30 is a reciprocating screw and a system defines an injection molding system. In this embodiment screw 38 is mounted for reciprocation within barrel 32, and includes a plurality of blowing agent inlets or injection ports 54, 55, 57, 59, and 61 arranged axially along barrel 32 and each connecting barrel 32 fluidly to pressure and metering device 58 and a blowing agent source 56. Each of injection ports 54, 55, 57, 59, and 61 can include a mechanical shut-off valve 154, 155, 157, 159, and 161 respectively, which allow the flow of blowing agent into extruder barrel 38 to be controlled as a function of axial position of reciprocating screw 38 within the barrel. In operation, according to this embodiment, a charge of fluid polymeric material and blowing agent (which can be a single-phase, non-nucleated charge in some embodiments) is accumulated in region 50 downstream of the downstream end 48 of screw 38. Screw 38 is forced distally (downstream) in barrel 32 causing the charge in region 50 to be injected into mold 37. A mechanical shut-off valve 64, located near orifice 70 of mold 37, then can be closed and mold 37 can be opened to release an injection-molded part. Screw 38 then rotates while retracting proximally (toward the upstream end 34 of the barrel), and shut-off valve 161 is opened while shut-off valves 155, 157, 154, and 159 all are closed, allowing blowing agent to be injected into the barrel through distal-most port 61 only. As the barrel retracts while rotating, shut-off valve 161 is closed while shut-off valve 159 is opened, then valve 159 is closed while valve 154 is opened, etc. That is, the shut-off valves which control injection of blowing agent from source 56 into barrel 32 are controlled so that the location of injection of blowing agent moves proximally (in an upstream direction) along the barrel as screw 38 retracts proximally. The result is injection of blowing agent at a position along screw 38 that remains essentially constant. Thus, blowing agent is added to fluid polymeric material and mixed with the polymeric material to a degree and for a period of time that is consistent independent of the position of screw 38 within the barrel. Toward this end, more than one of shut-off valves 155, 157, etc. can be open or at least partially open simultaneously to achieve smooth transition between injection ports that are open and to maintain essentially constant location of injection of blowing agent along barrel 38.

Once barrel 38 is fully retracted (with blowing agent having been most recently introduced through injection port 55 only), all of the blowing agent shut-off valves are closed. At this point, within distal region 50 of the barrel is an essentially uniform fluid polymeric material/blowing agent mixture. Shut-off valve 64 then is opened and screw 38 is urged distally to inject the charge of polymeric material and blowing agent into mold 37.

The embodiment of the invention involving a reciprocating screw can be used to produce conventional or microcellular foam. Where conventional foam is to be produced, the charge that is accumulated in distal region 50 can be a multi-phase mixture including cells of blowing agent in polymeric material, at a relatively low pressure. Injection of such a mixture into mold 37 results in cell growth and production of conventional foam. Where microcellular material is to be produced, a single-phase, non-nucleated solution is accumulated in region 50 and is injected into mold 37 while nucleation takes place.

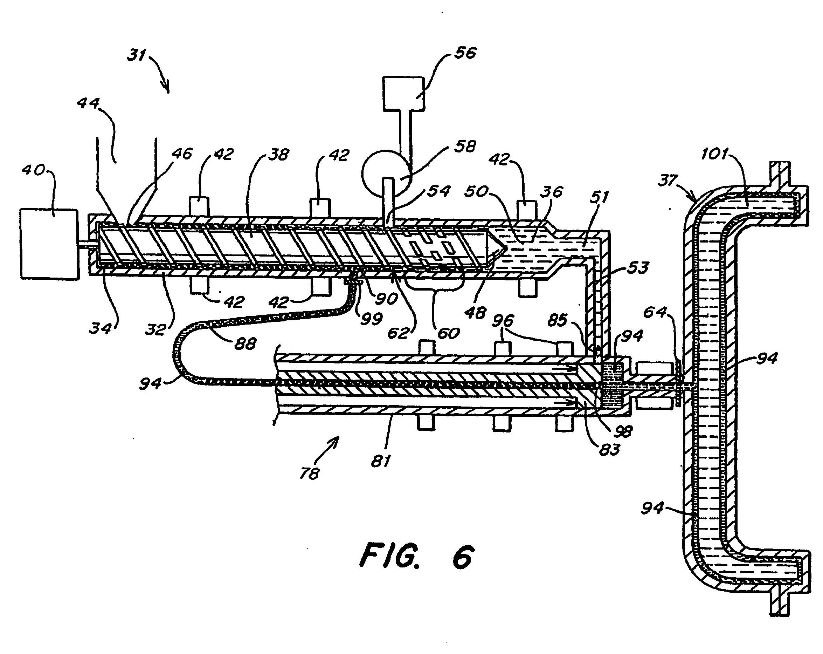

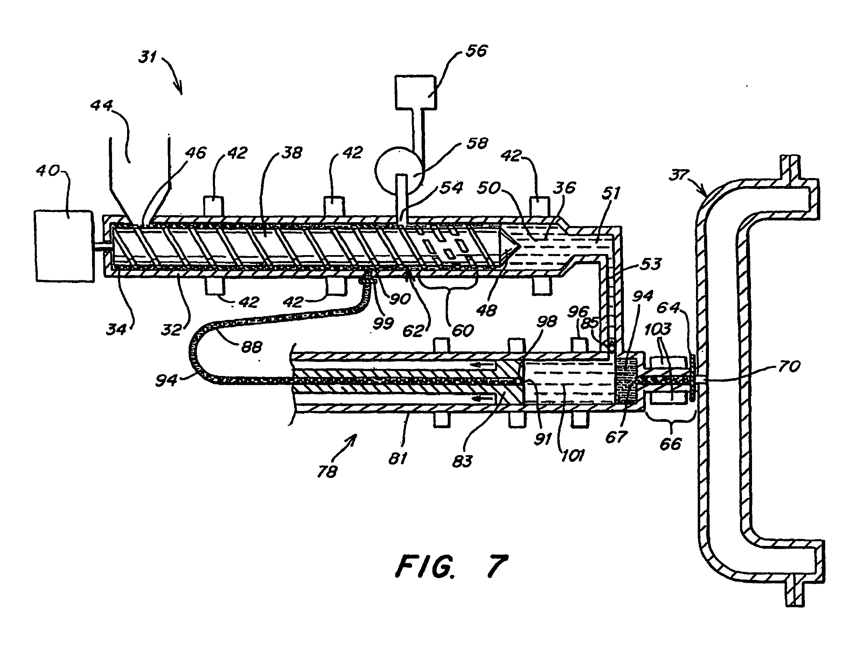

The described arrangement facilitates a method of the invention that is practiced according to another set of embodiments in which varying concentrations of blowing agent in fluid polymeric material is created at different locations in a charge accumulated in distal portion 50 of the barrel. This can be achieved by control of shut-off valves 155, 157, 154, 159, and 161 in order to achieve non-uniform blowing agent concentration. In this technique, articles having varying densities may be produced, such as, for example, an article having a solid exterior and a foamed interior. One technique for forming articles having portions that vary in density is described more fully below with reference to Figs. 6 and 7.

Although not shown, molding chamber 37 can include vents to allow air within the mold to escape during injection. The vents can be sized to provide sufficient back pressure during injection to control cell growth so that uniform microcellular foaming occurs. In another embodiment, a single-phase. non-nucleated solution of polymeric material and blowing agent is nucleated while being introduced into an open mold, then the mold is closed to shape a microcellular article.

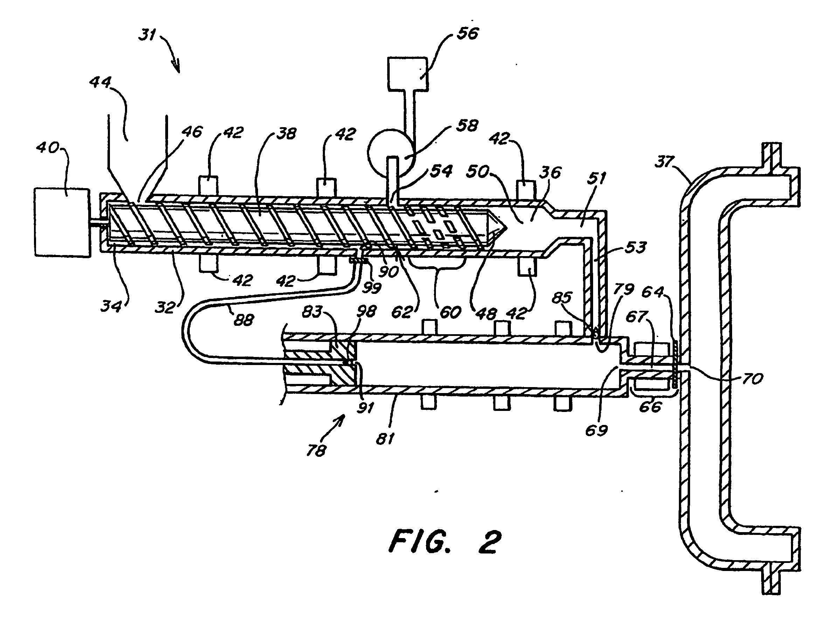

According to another embodiment an injection molding system utilizing a separate accumulator is provided. Referring now to Fig. 2, an injection molding system 31 includes an extruder similar to that illustrated in Fig. 1. The extruder can include a reciprocating screw as in the system of Fig. 1. At least one accumulator 78 is provided for accumulating molten polymeric material prior to injection into molding chamber 37. The extruder includes an outlet 51 fluidly connected to an inlet 79 of the accumulator via a conduit 53 for delivering a non-nucleated, single-phase solution of polymeric material and blowing agent to the accumulator.

Accumulator 78 includes, within a housing 81, a plunger 83 constructed and arranged to move axially (proximally and distally) within the accumulator housing. The plunger can retract proximally and allow the accumulator to be filled with polymeric material/blowing agent through inlet 79 and then can be urged distally to force the polymeric material/blowing agent mixture into mold 37. When in a retracted position, a charge defined by single-phase solution of molten polymeric material and blowing agent is allowed to accumulate in accumulator 78. When accumulator 78 is full, a system such as, for example, a hydraulically controlled retractable injection cylinder (not shown) forces the accumulated charge through nucleator 66 and the resulting nucleated mixture into molding chamber 37. This arrangement illustrates another embodiment in which a non-nucleated, single-phase solution of polymeric material and blowing agent is nucleated as a result of the process of filling the molding chamber. Alternatively, a pressure drop nucleator can be positioned downstream of region 50 and upstream of accumulator 78, so that nucleated polymeric material is accumulated, rather than non-nucleated material, which then is injected into mold 37.

In another arrangement, a reciprocating screw extruder such as that illustrated in Fig. 1 can be used with system 31 of Fig. 2 so as to successively inject charges of polymeric material and blowing agent (which can remain non-nucleated or can be nucleated while being urged from the extruder into the accumulator) while pressure on plunger 83 remains constant so that nucleation is prevented within the accumulator (or, if nucleated material is provided in the accumulator cell growth is prevented). When a plurality of charges have been introduced into the accumulator, shut-off valve 64 can be opened and plunger 83 driven distally to transfer the charge within the accumulator into mold 37. This can be advantageous for production of very large parts.

A ball check valve 85 is located near the inlet 79 of the accumulator to regulate the flow of material into the accumulator and to prevent backflow into the extruder, and to maintain a system pressure required to maintain the single-phase solution of non-nucleated blowing agent and molten polymeric material or. alternatively, to prevent cell growth of nucleated material introduced therein. Optionally, injection molding system 31 can include more than one accumulator in fluid communication with extruder 30 and molding chamber 37 in order to increase rates of production.

System 31 includes several additional components that will be described more fully below.

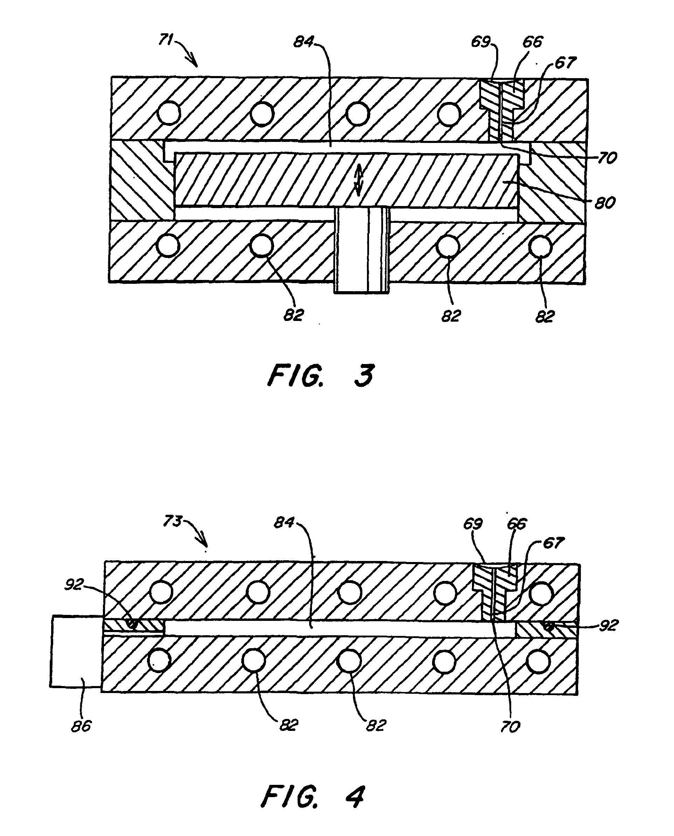

Figs. 3 and 4 illustrate molding chambers according to alternative embodiments for use with injection molding systems. In Fig. 3, a movable wall molding chamber 71 is illustrated schematically. including mold cavity 84, temperature control elements 82, moveable wall 80, pressurizing means (not shown) and in the preferred embodiment illustrated, at least one nucleator 66 including a nucleating pathway 67 having an inlet end 69 and an releasing end 70 which defines an orifice of mold cavity 84. In one embodiment, movable wall molding chamber 71 includes a plurality of nucleators 66. Movable wall 80 can be adjusted to increase the volume of the mold as the mold is filled with a nucleated mixture of polymeric precursor and blowing agent, thus maintaining a constant pressure within the mold. In this way, cell growth can be restricted, or controlled, appropriately.

In Fig. 4, a gas counter-pressure molding chamber 73 is illustrated schematically, including mold cavity 84, temperature control elements 82, pressure controller 86, seals 92, and in the preferred embodiment illustrated, at least one nucleator 66 including a nucleating pathway 67 including defining an orifice of the molding chamber 73. As described previously, the nucleating pathway 67 has an inlet end 69 and an releasing end 70 which defines an orifice of chamber 84. The pressure within the mold can be maintained, via pressure controller 86, to restrict or control cell growth in the nucleated mixture introduced into the mold.

Any combination of a movable-wall mold, a mold having a gas pressure controller, and temperature control elements in a mold can be used for a variety of purposes. As discussed, conditions can be controlled so as to restrict or control cell growth in a nucleated mixture within the mold. Another use for temperature control measurements is that a portion of the mold wall, or the entire mold wall, can be maintained at a relatively high or relatively low temperature, which can cause relatively greater or lesser cell growth at regions near the wall (regions at and near the skin of the microcellular mold and product) relative to regions near the center of the article formed in the mold.

The invention allows for rapid, cyclic, polymeric foam molding. After injection and molding, in a period of less than about 10 minutes, a second nucleated mixture can be created by injection into the molding chamber and allowed to foam and solidify in the shape of the enclosure, and to be removed. Preferably, the cycle time is less than about one minute, more preferably less than about 20 seconds. The time between introduction of the material into the mold and solidification is typically less than about 10 seconds. Low cycle times are provided due to reduced weight in foam material (less mass to cool) and low melt temperatures made possible by reduced viscosity of a supercritical fluid blowing agent. With lower melt temperatures less heat absorption is required by ejection.

Referring now to Figs. 6 and 7, another embodiment of the invention that makes use of system 31 is illustrated, and system 31 now will be described more fully. System 31 also includes a blowing agent-free conduit 88 connecting an outlet 90 of the extruder with an accumulator inlet 91. Inlet 91 of the accumulator is positioned at the face of plunger 83 of the accumulator. A mechanical shut-off valve 99 is positioned along conduit 88, preferably near outlet 90. Extruder outlet 90 is located in the extruder upstream of blowing agent inlet 54 (or multiple blowing agent inlets. as in the extrusion arrangement illustrated in Fig. 1, where that arrangement is used in the system as described in Figs. 6 and 7) but far enough downstream in the extruder that it can deliver fluid polymeric material 94. The fluid polymeric material 94 delivered by conduit 88 is blowing-agent-poor material, and can be essentially free of blowing agent. Thus. the system includes a first outlet 90 of the extruder positioned to deliver fluid polymeric material essentially free of blowing agent, or at reduced blowing agent concentration, from the extruder to a first inlet 91 of the accumulator, and a second outlet 51 downstream of the mixing region of the extruder positioned to deliver a mixture of fluid polymeric material and blowing agent (a higher blowing agent concentration than is delivered from outlet 90, i.e. blowing-agent-rich material) to a second inlet 79 of the accumulator. The accumulator can include heating units 96 to control the temperature of polymeric material therein. The accumulator includes an outlet that is the inlet 69 of nucleator 66. A passage (or nozzle) defining nucleating pathway 67 connects accumulator 78 to the molding chamber 37.

A series of valves, including ball check valves 98 and 85 located at the first and second inlets to the accumulator, and mechanical valves 64 and 99, respectively, control flow of material from the extruder to the accumulator and from the accumulator to the mold as desired, as described below according to some embodiments.

The invention involves, in all embodiments, the ability to maintain pressure throughout the system adequate to prevent premature nucleation where nucleation is not desirable (upstream of the nucleator), or cell growth where nucleation has occurred but cell growth is not desired or is desirably controlled.

Practicing the method according to one embodiment of the present invention involves injecting blowing agent-poor material into a mold to form a nearly solid skin, followed by injecting blowing agent-rich material into the mold to form a foamed core. This will be described with reference to Figs. 6 and 7. Although not illustrated, with proper synchronization this method can also be used to form articles having a foamed exterior and a solid interior.

Polymeric material that does not contain blowing agent, or contains blowing agent only to a limited extent is provided at the distal end of the accumulator and the proximal end of the accumulator. That is, blowing agent-poor material is provided just in front of a plunger and in the nucleating pathway and just upstream of nucleating pathway . Between these regions of blowing agent-poor material is a region of blowing agent-rich material in the accumulator. At this point, mechanical valve 64 connecting to mold 37 is opened and plunger 83 is driven downstream to force the material in accumulator 78 into mold 37. This is illustrated in Fig. 6. The first section of blowing agent-poor material 94 lines the exterior of the mold, forming an essentially solid exterior wall, then the blowing agent-rich material 101 fills the center of the mold and is nucleated while entering the mold. The distal limit of motion of the plunger stops short of the end of accumulator and the region of blowing agent-poor material 94 that had been located just in front of the plunger is now positioned at the distal end of the accumulator and filling the nucleating pathway 67 of the accumulator. Valve 64 then is closed and the resultant part is removed from mold 37. With mechanical valve 99 closed, the extruder is driven to introduce blowing agent-rich material, preferably as a single-phase, non-nucleated solution of polymeric material and blowing agent, into the accumulator as the plunger retracts proximally, as illustrated in Fig. 7. The plunger applies an essentially constant pressure to material in the accumulator, maintaining material 101 in a non-nucleated state. When the plunger has reached nearly its proximal limit, mechanical valve 99 is opened and blowing agent-poor material 94 is allowed to fill a section of the accumulator just in front of the plunger.

In another embodiment of the invention, with reference to Figs. 6 and 7, an injection-molded microcellular article having a blowing agent-poor exterior wall and a blowing agent-rich, microcellular foamed interior can be formed without the necessity of filling accumulator 78 with blowing agent-rich material sandwiched between blowing agent-poor material. In this embodiment blowing agent-rich material fills the mold but the distal-most part of the accumulator, defined by the nucleating pathway 67, is heated to a greater extent than is the remainder of the accumulator. This can be accomplished using heating units 103 positioned adjacent the nucleator. If needed, additional heating units can be provided to heat material in the accumulator upstream of the nucleating pathway. Material in the distal-most portion of the accumulator is heated to a great enough extent that, when the charge in the accumulator is injected into the mold, blowing agent in the highly-heated section very quickly diffuses out of the polymer and through vents (not shown) in the mold. In the polymeric material upstream of the distal-most, more highly-heated charge section, cell growth occurs to form microcellular material faster than blowing agent can diffuse out of the polymer. The distal most portion of the charge that is heated can define at least about 2% of the charge, or at least about 5%, or at least about 10%, or at least about 20% of the charge, and can be heated to a temperature at least about 10 °C higher than the average temperature of the charge, or at least about 20 °C, 40 °C, or 80 °C higher than the average temperature of the charge, prior to injecting the charge into a molding chamber.

In another embodiment of the invention a single-phase, homogeneous solution of polymeric material and blowing agent can be injected into a mold while maintaining pressure in the mold high enough to prevent nucleation. That is, injection occurs without nucleation. The homogeneous, single-phase solution then can be frozen into a solid state in the mold, and the mold opened. At this point nucleation and foaming do not occur. The molded article then can be heated to cause nucleation and foaming, for example by placement in a glycerine bath.

A variety of articles can be produced according to the invention, for example, consumer goods and industrial goods such as polymeric cutlery. automotive components, and a wide variety of other injection molded parts.

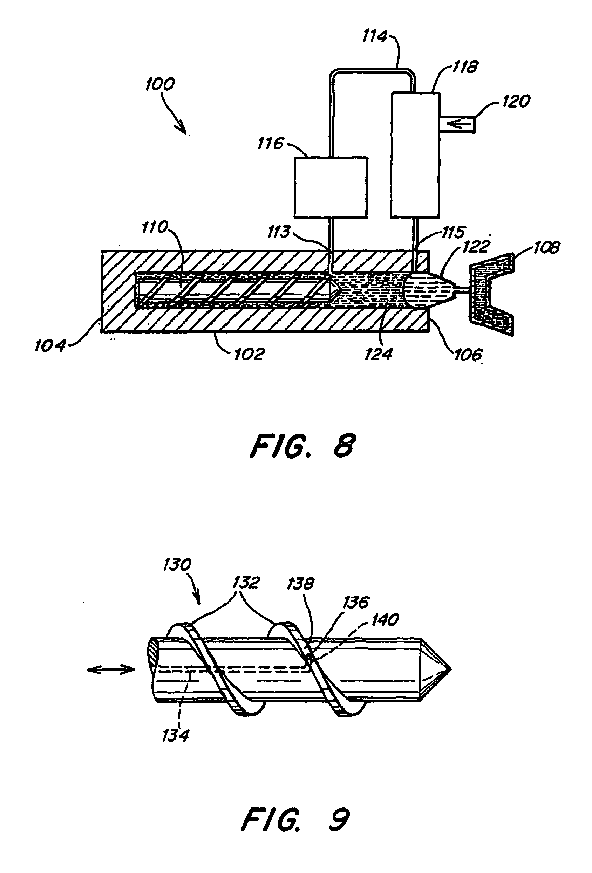

Fig. 8 illustrates schematically an injection molding system 100 according to another embodiment. Injection molding system 100 includes an extruder that can be similar to that illustrated in Fig. 1, including a barrel 102 having a first. upstream end 104 and a second, downstream end 106 connected to a molding chamber 108. Mounted for reciprocation and rotation within barrel 102 is a screw 110 operably connected, at its upstream end, to a drive motor (not illustrated). A sidestream 114, connecting an intake 113 and a port 115 of the barrel, the port downstream of the intake, includes a melt pump 116 and mixer 118 fluidly connected in sequence. Melt pump 116 can be a gear pump or a small extruder, which are known in the art.

The techniques of the invention described above can be used also in gas-assist co-injection. In this technique a precursor of microcellular material is extruded and nucleated while being introduced into a mold, as described above, while gas is injected into the melt stream in such a way as to form, in the mold, an exterior layer against the mold walls of nucleated polymeric material and a central void filled with the co-injected gas. Cell growth can be made to occur as in other embodiments. Mixer 118 includes a blowing agent injection port 120 for introducing a blowing agent therein. Mixer 118 can be a static mixer or a cavity transfer mixer, which are also known in the art. The arrangement illustrated in Fig. 8 facilitates another method of the invention that is useful for forming injection molded microcellular parts having varying material densities, as described previously. The method involves introducing into extruder barrel 102 a pre-polymeric material, melting the pre-polymeric material, and advancing molten polymeric material 124 towards the downstream end 106 of extruder 100. As the molten polymeric material 124 advances through extruder barrel 102, a portion is diverted and advanced through intake 113 into sidestream 114 by melt pump 116 (for example, after the distal end of screw 110 is retraced proximally of intake 113 of side arm 114). As the molten polymeric material in sidestream 114 advances through mixer 118, blowing agent from gas injection port 120 is introduced and mixed thoroughly therein to form a single-phase, non-nucleated solution of blowing agent and molten polymeric material which is advanced from sidestream 114 into the downstream end 106 of extruder barrel 102 through port 115, as illustrated in Fig. 8, while reciprocating screw 110 fully retracts. This creates a blowing agent-rich region 122 at the distal most end of the barrel and a blowing agent-poor region proximal of the blowing agent-rich region. The relative amount of blowing agent-rich material and a blowing agent-poor material can be controlled by the rate at which material is passed through side arm 14 and enriched with blowing agent. Thereafter, the reciprocating action of screw 110 is used to inject the blowing agent-rich, single-phase solution of non-nucleated blowing agent and molten polymeric material 122 followed by a portion of the blowing agent-poor molten polymeric material 124 into molding chamber 108.

In another embodiment, the invention provides a technique for rapidly and efficiently introducing a blowing agent into a fluid polymeric precursor in injection molding apparatus as described herein, as well as in extrusion apparatus in accordance with essentially any arrangement. This embodiment includes an extrusion screw, illustrated in Fig. 9, having an orifice in a surface of the screw positionable within an extrusion barrel (not shown) that fluidly communicates with a source of blowing agent. The orifice defines the terminus of a lumen passing from a location connectable to the source, such as a location at the proximal end of the screw. In a preferred embodiment, the lumen passes longitudinally along the rotational axis of the screw from the proximal end of the screw and connects with one or more orifices on the surface of the screw. The one or more orifices preferably are located at outer surfaces of screw flights or can be slightly recessed from outer surfaces of flights, this positioning allowing introduction of blowing agent in a manner such that the blowing agent undergoes shearing/diffusion against the inner surface of the barrel. One or more orifices can be located in regions between flights as well, or a combination of orifices at a variety of locations can be used. Referring to Fig. 9, an extruder screw 130 includes a flight 132 and a lumen 134 that provides communication with an orifice 136 on an exterior surface 138 of flight 132. Portion 140 of lumen 134 passes from the lumen at the central axis of the screw to orifice 136. One advantage in the introduction of blowing agent via an orifice within a screw is that uniformity of blowing agent within a polymeric precursor can be provided in an arrangement using a reciprocating screw.

Articles can be produced having thicknesses, or cross-sectional dimension, of less than 2.54 mm (0.100 inch), preferably no more than about 1.91 mm (about 0.075 inch), more preferably no more than about 1.27 mm (about 0.050 inch), more preferably no more than about 0.64 mm (about 0.025 inch), more preferably still no more than about 0.25 mm (about 0.010 inch), via injection molding, because a single-phase solution of polymeric precursor and supercritical fluid has a particularly low viscosity and, in this manner, can be injected into a mold and formed as a foamed article therein. For example, a single-phase solution of supercritical fluid and polymeric precursor can be introduced into a mold and a conventionally-foamed or microcellular article can be produced thereby. The low viscosity of the fluid injected into the mold allows injection-mold cycle times, as described above, of less than 10 minutes, preferably less than 5 minutes. and more preferably less than 1 minute, preferably less than 30 seconds, more preferably less than 20 seconds, more preferably less than 10 seconds, and more preferably still less than 5 seconds.

The invention provides for the production of molded microcellular polymeric articles of a shape of a molding chamber, including at least one portion have a cross-sectional dimension of no more than about 3.17 mm (about 0.125 inch) or, in other embodiments, smaller dimensions noted above, the article having a void volume of at least about 5%. Preferably, the void volume is at least about 10%, more preferably at least about 15%, more preferably at least about 20%, more preferably at least about 25%, and more preferably still at least about 30%. In other embodiments the article has a void volume of at least about 50%. This is a significant improvement in that it is a challenge in the art to provide weight reduction in polymeric material, via foam void volume, in articles having very small dimensions. The articles include the above-noted void volumes in those sections that are of cross-sectional dimension of no more than about 3.17 mm (0.125 inch), or other, smaller dimensions noted above.

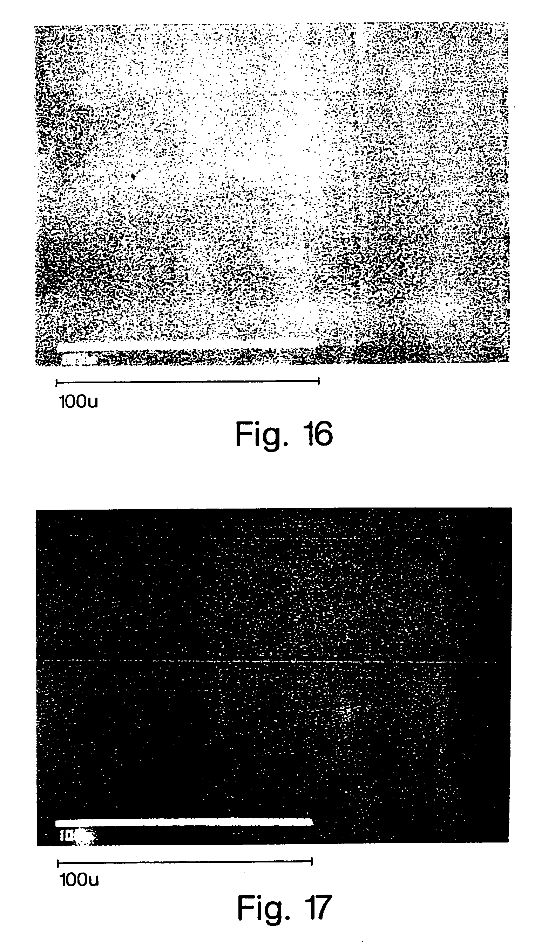

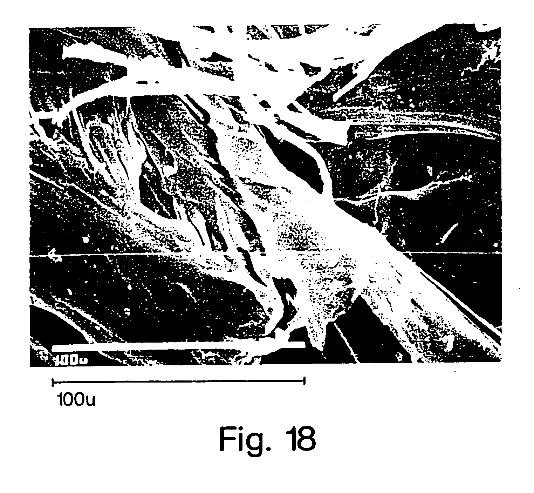

The invention also provides a method to produce thick and thin foam molded parts with surfaces replicating solid parts. At least a portion of the surface of these parts is free of splay and swirl visible to the naked human eye. Figs. 16-18, in conjunction with Example 9 (below) demonstrate formation of polymeric parts having surfaces free of splay and a swirl visible to the naked human eye. Such molded parts can be produced when the temperature of the melt and mold temperature and a blowing agent concentration is optimized to allow blowing agent to diffuse away from the surface of the part so that the surface includes a skin layer essentially free of cells. This skin layer is essentially solid polymer, thus the part appears as a solid polymeric part appears to the naked human eye. Splay and a swirl, in foamed polymeric material. is caused by bubbles at the surface being dragged against a mold wall. Where bubbles at the surface are removed, due to temperature control, splay and a swirl is avoided. In these embodiments molded parts are produced having an outer skin of essentially solid polymeric material free of cells, having a thickness at least three times the average cell size of the foam material. Preferably, the outer skin thickness is at least about five times the average cell size of the material. Another reason that molded parts can be produced, according to the invention, that are free of visible splay and a swirl is that the diffusion rate of a supercritical fluid blowing agent is believed by the inventors to be more rapid than that of typical blowing agents, allowing diffusion at the surface of the article to occur, as described, to form a solid skin layer.

As mentioned, the invention provides for the production of molded foam polymeric material, preferably microcellular material having thin sections. In particular, articles having high length-to-thickness ratios can be produced. The invention provides injection molded polymeric materials having length-to-thickness ratios of at least about 50:1 where the polymer has a melt index of less about 10. Preferably the length-to-thickness ratio is at least about 75:1, more preferably at least about 100:1, and more preferably still at least 150:1. An example of material having a melt index of less than about 10 is polystyrene. In another embodiment an article is provided having a length-to-thickness ratio of at least about 120:1, the polymer having a melt flow rate of less than about 40. In this embodiment, the length-to-thickness is preferably at least about 150:1, more preferably at least 175:1, more preferably at least about 200:1, and more preferably still at least 250:1. An example of a material with a melt flow rate less than about 40 is polyolefin such as polyethylene. Length-to-thickness ratio, in this context, defines the ratio of the length of extension of a portion of a polymeric molded part extending away from the injection location in the mold (nozzle) and the thickness across that distance.

One particularly advantageous combination of features of the invention is a thin molded part at a relatively high void volume. In particular, the invention provides foam polymeric articles having a portion of thickness less than about 1.2 millimeters and a void volume of at least 30%. In another embodiment a polymeric article having a thickness of less than about 0.7 millimeters is provided having a void volume of at least 15%.

In preferred embodiments, parts are provided having thicknesses as defined herein, at void volumes defined herein, where the maximum thickness exists over at least about 25% of the article, that is, a least about 25% of the area of a thin molded part is of a thickness less than that described. In other embodiments more of the part can be of thickness less than the maximum defined. for example 50% or 100%.

It is a feature of the present invention that articles can be produced that are opaque without the use of opacifiers. This is because polymeric foam diffracts light, thus it is essentially opaque and has a white appearance. It is a feature of the invention that microcellular foams are more opaque, and uniformly so. than conventional foams. This is a significant advantage in connection with articles constructed and arranged to contain material that is subject to destruction upon exposure to light, such as food containers. Such material can involve food consumable by animals such as humans, containing vitamins that can be destroyed upon exposure to light. While opacifiers such as pigments are typically added to articles, pigmented material is less amenable to recycling. The present invention provides thin, opaque articles that include less than about 1% by weight auxiliary opacifer, preferably less than about 0.05% by weight auxiliary opacifer, and more preferably still material that is essentially free of auxiliary opacifer. "Auxiliary opacifer", in the present invention, is meant to define pigments, dyes, or other species that are designed specifically to absorb light, or talc or other materials that can block or diffract light. Those of ordinary skill in the art can test whether an additive is an opacifer. Microcellular blow molded articles of the invention have the appearance of essentially solid, white, plastic articles, which offers significant commercial appeal.

The systems can include heated runners (not shown). The term "runner" as used herein, is meant to define a fluid pathway that fluidly connects the outlet end of the injection system (outlet of nucleator according to some embodiments) and the molding chamber, and/or fluidly connecting various portions of the molding cavity for example where complex molded shapes are desired. Runners are known in the art. In some conventional foam injection molding systems, material left in runners hardens, and is removed with the molded part. Runners addressed by thermal control units, such as passageways for flowing heated fluid, can be provided. This is useful in accordance with certain embodiments of the present invention in which it is advantageous to maintain the polymeric article precursor material in a fluid state within the runners in order to eliminate a pressure drop that can occur if a gap in material were to occur within the runner, when, for example, hardened material has been removed. The arrangement can involve, for example, an extruder for supplying a fluid. single-phase solution of polymeric material and blowing agent, a nucleating pathway, and downstream of the pathway a runner between the pathway and a molding chamber, the runner including a valve at its downstream end to be opened when the mold is to be filled and closed when the mold is to be opened and an article removed. If molten polymeric material is used, then if the runner is heated the nucleated material in the runner will remain fluid and suitable for injection into the mold. The embodiment of the invention including temperature-controlled runners can find use in any of a wide variety of injection moldings systems, involving any number of runners between various components, and valves positioned, if needed, appropriately to allow for filling molds or mold sections periodically without the need for removal and discarding of hardened material from the runners. The runner can be the nucleating pathway.

The function and advantage of the present invention will be more fully understood from the examples below. The following examples are intended to illustrate the benefits of the present invention, but do not exemplify the full scope of the invention. The examples below demonstrate advantages of injection molding of a charge of polymeric material and supercritical fluid blowing agent, in that articles are formed that have a surface, corresponding to an interior surface of a molding chamber, that is free of splay and swirl visible to the naked human eye.

### Example 1

A two stage injection molder (Engel manufacture) was constructed with a 32:1 l/d, 40 mm plasticizing unit which feeds melted polymer into a 40 mm plunger. The plunger and plasticizing units were connected by a spring loaded ball check joiner assembly. The plunger was able to inject into a mold through a typical pneumatically driven shut-off nozzle. Injection of supercritical CO₂ was accomplished by placing at approximately 16 to 20 diameters from the feed section an injection system that included one radially positioned port containing 176 orifices of 0.5 mm (.02 inch) diameter. The injection system included an actuated control valve to meter a mass flow rate of blowing agent at rates from 0.09 to 5.4 kg/hr .2 to 12 lbs/hr.

The plasticator was equipped with a two stage screw including a conventional first stage feed, barrier transition, and metering section, followed by a multi-flighted mixing section for blowing agent homogenization. The barrel was fitted with heating/cooling bands. The design allowed homogenization and cooling of the homogeneous single phase solution of polymer and gas.

The hydraulic system used to move all parts of the molding machine was modified to have a melt pressurization pressure of at least 6.9 MPa (1000 psi), but not more than 193 MPa (28,000 psi) at all times. This technique controls and maintains the single phase solution of polymer and gas at all times before plastic injection into the mold.

### Example 2: Injection Molding Microcellular Polystyrene

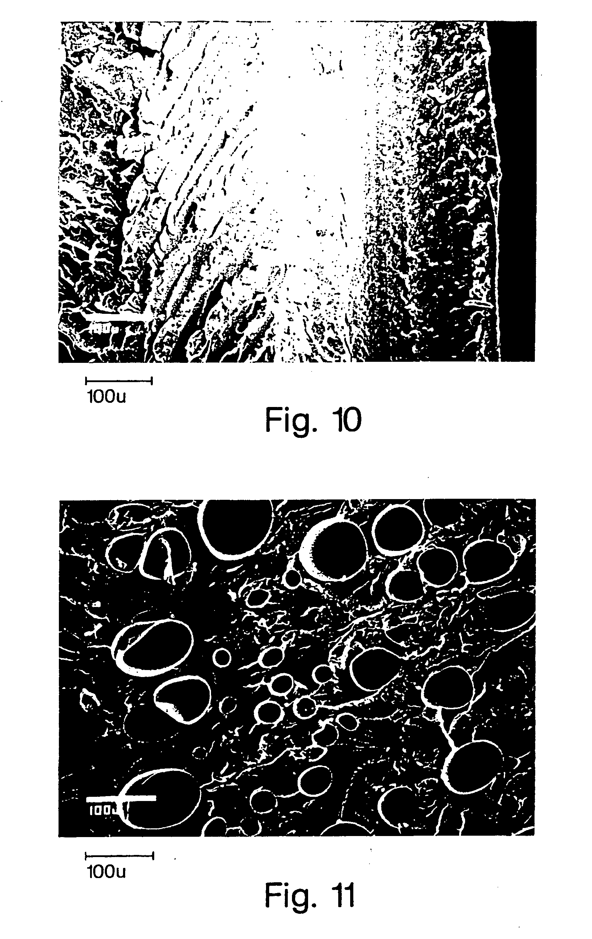

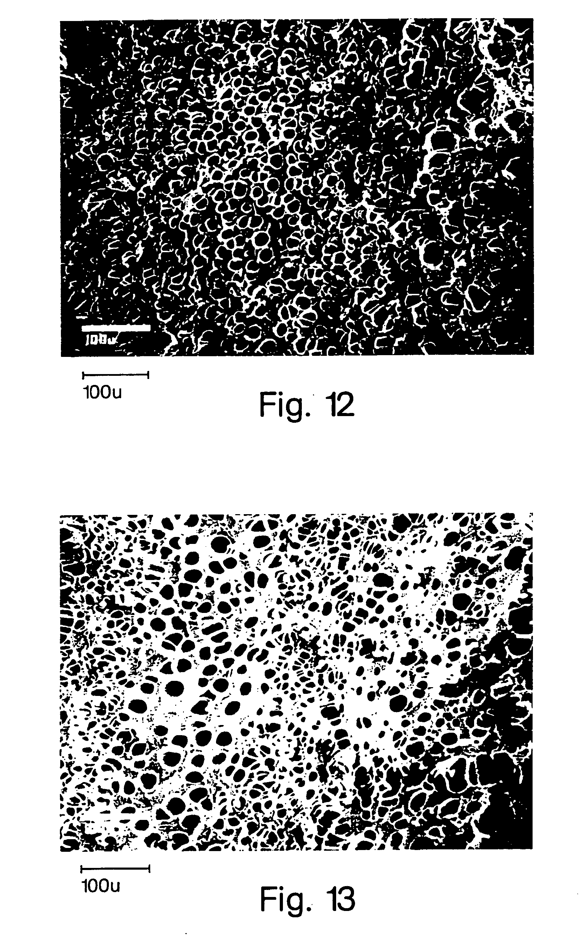

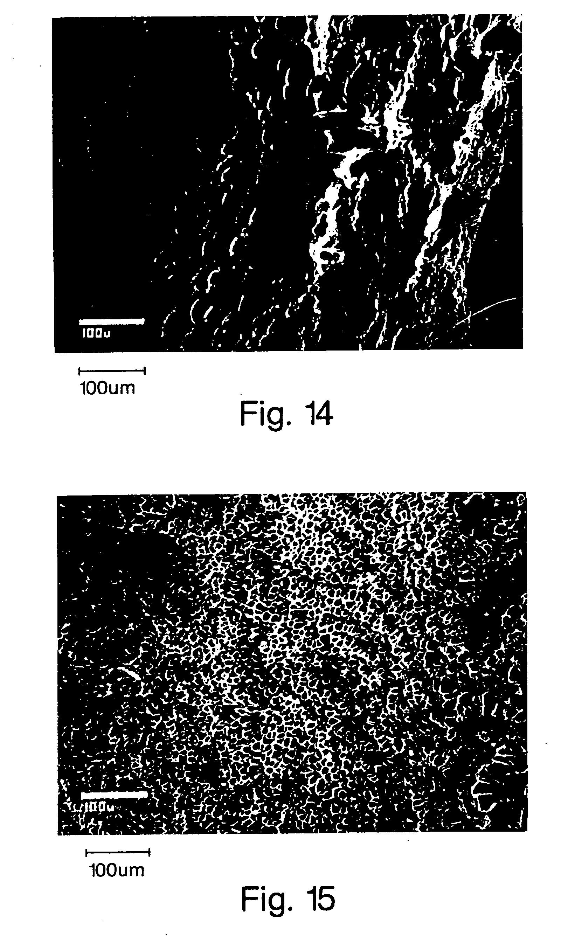

The molding machine as described in example 1 was used to mold microcellular polystyrene plaques. Polystyrene pellets (Novacor 2282, 11 M.I.) were fed into the plasticator and, in most cases, mixed with blowing agent to form a single-phase solution, then nucleated by injection into a 130 x 280 x 1.3 mm (5 x 11 x 0.050 inch), center gated plaque mold. Injection occurred through a cold sprue. Injection rate was varied to determine the relationship between the processing variables and cell size and weight reduction. Cell size was controlled to under 30 microns and weight reduction as high as 20%. See Tables 1 and 2 and corresponding Figs. 10-15.

**Table 1: Effect of Injection Speed on Cell Size and Weight Reduction**

| Injection Speed (inches cm/sec per sec) | Cell Size (microns) | Blowing Agent (%) | Weight Reduction (%) | Fig. |
|---|---|---|---|---|
| 28 (11) | No Cells | 11.9 | 11 | 10 |
| 13 (5) | 100 | 11.9 | 11 | 11 |
| 10 (4) | 10 | 11.9 | 19 | 12 |
| 5 (2) | 10 | 11.9 | 18 | 13 |
| 2.5 (1) | 30 | 11.9 | 12 | - |

**Table 2: Effect of Gas Concentration on Cell Size and Weight Reduction**

| | | | | |
|---|---|---|---|---|
| Melt temperature = 160°C | | | | |
| Mold Temperature = 66°C | | | | |
| Injection Speed = 100 mm/sec (4.0"/sec) | | | | |
| Sprue = 11 cm (.375') diameter | | | | |

| Gas Concentration kg/hr (lbs./hr.) | Cell Size (microns) | Weight Reduction (%) | Blowing Agent (%) | Fig. |
|---|---|---|---|---|
| 0.4 (0.9) | 20 to 150 | 21 | 134 | 14 |
| 0.6 (1.4) | 1 to 5 | 23 | 21 | 15 |

### Example 4: Injection Molding Polypropylene to high levels of Weight Reduction

The injection molding machine described in example 1 was used to mold polypropylene (4 melt flow rate (MFR), copolymer, Montell 7523), polypropylene (20 MFR, copolymer, Montell SD-376) and a talc -filled polypropylene (4 MFR, 40% talc-filled, Montell 65f4-4) into a 130 x 280 x variable thickness mm (5 x 11 x "variable thickness" inch) plaque. High weight reductions were accomplished by using the following conditions:

**Table 3:**

| Material | Part Thickness mm (inches) | Weight Reduction (%) | Melt Temperature °C (°F) | Gas Percent (%) | Mold Temperature °C (°F) |
|---|---|---|---|---|---|
| 7523 | 1.3 (.050) | 14.6 | 154 (310) | 12.5 | 37 (100) |
| SD-376 | 2.5 (.100) | 30 | 160 (320) | 12 | 66 (150) |
| 65f4-4 | 2.5 (.100) | 15 | 165 (330) | 15 | 93 (200) |

### Example 5: Injection molding Polystyrene parts with density reductions greater than 70%

The injection molding machine described in example 1 was used to mold polystyrene under conditions similar to those found in example 2, but with mold temperatures ranging from 66 to 121°C (150 F to 250 F) and cooling times ranging from 3.2 to 22.8 seconds. Large density reductions were seen as follows:

**Table 4:**

| Mold Temperature °C (°F) | Melt Temperature °C (°F) | Cooling Time (sec) | Solid Part Density | MuCell Density | Density Reduction |
|---|---|---|---|---|---|
| 66 (150) | 121 (250) | 3.2 | .88 g/cc | .37 g/cc | 58% |
| 14 (250) | 121 (250) | 22.8 | .88 g/cc | .16 g/cc | 82% |

### Example 6: Post Mold Nucleation and Cell Growth of a Solidified Polmer/Supercritical Fluid Part

The injection molding machine described in Example 1 was used to mold polystyrene (Novacor 2282, 11 M.I.). Polystyrene pellets were fed into the plasticator and injected as described in Example 2. The material injected into the mold was cooled in the mold to a temperature below the solidification temperature of the polystyrene. The mold was opened and the part was removed in a non-foamed state. The part then was subjected to an external heat source (glycerine bath) whereupon it was nucleated and cells were grown. A microcellular article resulted.

### Example 7: Demonstration of Viscosity Reduction in Polymer Molding

This example demonstrates the advantage of using supercritical fluid blowing agent to reduce viscosity for introduction of polymeric material into a mold, at relatively low melt temperatures, while realizing the benefits of microcellular foaming.

A molding machine was used to mold polystyrene as described in Example 2 with the following exception. The mold had dimensions of 130 x 280 x 0.5 mm (5 x 11 x 0.020 inches). Under the same conditions of Example 2 polystyrene was injected with 0% blowing agent. The maximum flow length obtainable was I inch resulting in a length-to-thickness ratio of 50. An identical experiment was run with 15% supercritical carbon dioxide blowing agent. The maximum flow length was at least 14 cm (5.5 inches) with a length-to-thickness ratio of 270.

### Example 8: Injection Molding of Polypropylene Below its Crystalline Melting Point

The injection molding machine described in Example 1 was used to mold polypropylene (4 MFR. copolymer, Montell 7523) into a 130 x 280 x 1.3 mm (5 x 11 x .050 inch) mold. With 0% blowing agent, typical melt temperatures needed to fill such a mold are approximately 221°C (430° F). With 15% supercritical carbon dioxide blowing agent it was possible to inject polypropylene below its crystalline melting point which is nominally 163°C (325° F). Actual melt temperature was 154°C (310°F).

### Example 9: Demonstration of a Microcellularly Foamed Article with a Near Perfect Surface

A molding machine as described in Example 2 was used to mold polystyrene (Novacor 2282 11 M.I.). Polystyrene pellets were fed into a plasticator and mixed with CO₂ blowing agent to form a single phase solution of supercritical CO₂ and polystyrene, then nucleated by injection into a 130 x 280 x 1.3 mm (5 x 11 x .050 inch) plaque mold. Processing conditions were optimized to identify the appropriate conditions to obtain a high nucleation density, as well as a solid looking skin. Photocopies of photomicrographs are provided as Figs. 16-18 to demonstrate the effectiveness of this technique. Fig. 16 is provided for comparison, and shows solid non-foamed polystyrene, injection molded using standard, non-foam injection molding techniques.

As can be seen, ideal conditions involve a balance of melt temperature, mold temperature, and blowing agent concentration. The melt temperature must be high enough so that blowing agent diffusion rate in the melt is relatively rapid, and the mold temperature must be high enough so that blowing agent diffusion out of the melt occurs to a significant degree at the surface, but the mold temperature must be low enough to avoid warpage and other distortion of the product. The blowing agent diffusion rate is dependent upon melt temperature, blowing agent concentration, differential pressure, and mold temperature. The diffusion rate of the blowing agent out of the melt must be greater than the rate at which the polymer surface cools and solidifies.

**Table 5:**

| Surface Characteristics | Fig. | Temp. Melt (°C) | Temp. Mold (°C) | Injection Speed cm/sec. (inches per sec) | Blowing Agent (%) |
|---|---|---|---|---|---|
| Solid Looking | 17 | 204 (400°F) | 80 (175°F) | 13 (5.0) | 11.50 |
| Streaks | | 177 (350°F) | 27 (80°F) | 8 (3.0) | 5.15 |
| Bubbles | | 177 (350°F) | 27 (80°F) | 11 (4.4) | 23% |
| Warped, Small Bubbles on Surface | | 210 (410°F) | 82 (180°F) | 5 (2.0) | 11.50 |
| Solid, But Cracked | | 196 (385°F) | 71 (160°F) | 9 (3.5) | 9.75 |
| Swirls | 18 | 204 (400°F) | 31 (87°F) | 25 (10) | 13.25% |

Those skilled in the art would readily appreciate that all parameters listed herein are meant to be exemplary and that actual parameters will depend upon the specific application for which the methods of the present invention are used. It is, therefore, to be understood that the foregoing embodiments are presented by way of example only and that, within the scope of the appended claims, the invention may be practiced otherwise than as specifically described.

## Claims

1. A method for forming a molded polymeric part comprising:
introducing polymeric material admixed with supercritical fluid into a mold; and
allowing the polymeric material to solidify in the mold;
**characterised in that** the mold includes a portion having an interior dimension of less than 3.17 mm (0.125 inch).

2. A method according to Claim 1, wherein the mold includes a portion having an interior dimension of less than 2.54 mm (0.100 inch).

3. A method according to Claim 1 or Claim 2, comprising allowing the polymeric material to solidify in the mold to form a microcellular polymeric material.

4. A method according to Claim 3, wherein the microcellular polymeric material has a void volume of at least 5%.

5. A method according to any preceding Claim, further comprising forming a single-phase solution of the polymeric material and the supercritical fluid and introducing the single-phase solution into the mold.

6. A method according to Claim 5, further comprising nucleating the single-phase solution while introducing the solution into the mold.

7. A method according to any preceding Claim, wherein the supercritical fluid is carbon dioxide.

8. A method according to any of Claims 1-6, wherein the supercritical fluid is nitrogen.

9. A method according to any preceding Claim, further comprising introducing a physical blowing agent into the polymeric material to form a blowing agent and polymeric material mixture and processing the mixture under conditions such that the blowing agent is a supercritical fluid.

10. A method according to any preceding Claim, further comprising introducing a chemical blowing agent into the polymeric material to form a blowing agent and polymeric material mixture and processing the mixture under conditions such that the blowing agent is a supercritical fluid.

## Patentansprüche

1. Verfahren zum Formen eines Kunststoffteils umfassend:
Einführen eines Kunststoffmaterials, dem eine überkritische Flüssigkeit zugemischt worden ist, in eine Form; und
Verfestigenlassen des Kunststoffmaterials in der Form;
**dadurch gekennzeichnet, dass** die Form einen Teil aufweist, der eine Innenabmessung von weniger als 3,17 mm (0,125 Inch) aufweist.

2. Verfahren gemäß Anspruch 1, worin die Form einen Teil aufweist, der eine Innenabmessung von weniger als 2,54 mm (0,100 Inch) aufweist.

3. Verfahren gemäß Anspruch 1 oder Anspruch 2, umfassend das Verfestigenlassen des Kunststoffmaterials in der Form unter Bildung eines microcellulären Kunststoffmaterials.

4. Verfahren gemäß Anspruch 3, worin das microcelluläre Kunststoffmaterial ein Hohlvolumen von wenigstens 5 % aufweist.

5. Verfahren gemäß einem der vorstehenden Ansprüche, ferner umfassend das Bilden einer einphasigen Lösung des Kunststoffmaterials und der überkritischen Flüssigkeit und das Einführen der einphasigen Lösung in die Form.

6. Verfahren gemäß Anspruch 5, ferner umfassend das Nukleierenlassen der einphasigen Lösung, während die Lösung in die Form eingeführt wird.

7. Verfahren gemäß einem der vorstehenden Ansprüche, worin die überkritische Flüssigkeit Kohlendioxid ist.

8. Verfahren gemäß einem der Ansprüche 1 bis 6, worin die überkritische Flüssigkeit Stickstoff ist.

9. Verfahren gemäß einem der vorstehenden Ansprüche, ferner umfassend das Einführen eines physikalischen Treibmittels in das Kunststoffmaterial unter Bildung einer Mischung aus dem Treibmittel und dem Kunststoffmaterial und Verarbeiten der Mischung unter Bedingungen, sodass das Treibmittel eine überkritische Flüssigkeit ist.

10. Verfahren gemäß einem der vorstehenden Ansprüche, ferner umfassend das Einführen eines chemischen Treibmittels in das Kunststoffmaterial unter Bildung einer Mischung aus dem Treibmittel und dem Kunststoffmaterial und Verarbeiten der Mischung unter Bedingungen, sodass das Treibmittel eine überkritische Flüssigkeit ist.

## Revendications

1. Procédé de formation d'une pièce polymère moulée, comprenant :
l'introduction d'un matériau polymère mélangé avec un fluide supercritique dans un moule ; et
l'action de laisser le matériau polymère se solidifier dans le moule ;
**caractérisé en ce que** le moule comprend une partie possédant une dimension interne inférieure à 3,17 mm (0,125 pouce).

2. Procédé selon la revendication 1, dans lequel le moule comprend une partie possédant une dimension interne inférieure à 2,54 mm (0,100 pouce).

3. Procédé selon la revendication 1 ou la revendication 2, comprenant l'action de laisser le matériau polymère se solidifier dans le moule pour former une matière polymère microcellulaire.

4. Procédé selon la revendication 3, dans lequel la matière polymère microcellulaire présente un volume de vide d'au moins 5 %.

5. Procédé selon l'une quelconque des revendications précédentes, comprenant en outre la formation d'une solution monophasée du matériau polymère et du fluide supercritique et l'introduction de la solution monophasée dans le moule.

6. Procédé selon la revendication 5, comprenant en outre la nucléation de la solution monophasée tout en introduisant la solution dans le moule.

7. Procédé selon l'une quelconque des revendications précédentes, dans lequel le fluide supercritique est le dioxyde de carbone.

8. Procédé selon l'une quelconque des revendications 1 à 6, dans lequel le fluide supercritique est l'azote.

9. Procédé selon l'une quelconque des revendications précédentes, comprenant en outre l'introduction d'un agent d'expansion physique dans le matériau polymère pour former un mélange d'agent d'expansion et de matériau polymère et le traitement du mélange dans des conditions telles que l'agent d'expansion soit un fluide supercritique.

10. Procédé selon l'une quelconque des revendications précédentes, comprenant en outre l'introduction d'un agent d'expansion chimique dans le matériau polymère pour former un mélange d'agent d'expansion et de matériau polymère et le traitement du mélange dans des conditions telles que l'agent d'expansion soit un fluide supercritique.
